(19) Europäisches Patentamt
European Patent Office
Office européen des brevets

(11) **EP 3 463 945 B1**

(12) **FASCICULE DE BREVET EUROPEEN**

(45) Date de publication et mention
de la délivrance du brevet:
**01.12.2021 Bulletin 2021/48**

(21) Numéro de dépôt: **17731205.5**

(22) Date de dépôt: **17.05.2017**

(51) Int Cl.:
*B60H 1/00* *(2006.01)*   *G01N 33/00* *(2006.01)*
*G01N 15/06* *(2006.01)*   *B60H 3/00* *(2006.01)*
*B60H 3/06* *(2006.01)*

(86) Numéro de dépôt international:
**PCT/FR2017/051189**

(87) Numéro de publication internationale:
**WO 2017/203131 (30.11.2017 Gazette 2017/48)**

(54) **SYSTÈME DE QUALITÉ D'AIR POUR VÉHICULE AUTOMOBILE**

LUFTQUALITÄTSSYSTEM FÜR KRAFTFAHRZEUG

AIR QUALITY SYSTEM FOR A MOTOR VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.05.2016 FR 1654749**

(43) Date de publication de la demande:
**10.04.2019 Bulletin 2019/15**

(73) Titulaire: **Valeo Systemes Thermiques
78320 Le Mesnil Saint Denis (FR)**

(72) Inventeurs:
• **LADRECH, Frédéric**
**78322 LE MESNIL SAINT-DENIS CEDEX (FR)**
• **MARTINELL, Amanda**
**78322 LE MESNIL SAINT-DENIS CEDEX (FR)**

(74) Mandataire: **Valeo Systèmes Thermiques
Service Propriété Intellectuelle
ZA l'Agiot, 8 rue Louis Lormand
CS 80517
La Verrière
78322 Le Mesnil-Saint-Denis Cedex (FR)**

(56) Documents cités:
EP-A1- 3 286 025      EP-A1- 3 386 785
WO-A1-2015/076872     WO-A1-2016/083697
JP-A- S56 135 310     JP-A- S62 105 713
JP-A- S63 240 422     JP-A- 2011 168 150
US-A1- 2015 360 544   US-A1- 2016 052 363

**Description**

L'invention a pour objet un système de qualité d'air pour véhicule automobile.

Un système de qualité d'air d'un véhicule automobile permet une dépollution de l'air destiné à alimenter l'habitacle du véhicule automobile.

Ce système est soit intégré à un dispositif de chauffage, ventilation et/ou climatisation du véhicule automobile, soit un module spécialement dédié.

Dans un cas comme dans l'autre, le système comprend généralement un purificateur d'air, tel qu'un filtre et/ou un ioniseur, permettant d'assainir le flux d'air qui le parcourt avant de pénétrer dans l'habitacle du véhicule.

Le système de qualité d'air s'avère donc primordial pour la santé des utilisateurs du véhicule automobile.

Néanmoins, du fait que le système est passif et sollicité tout au long de la vie du véhicule automobile, il n'est pas rare que le purificateur d'air s'encrasse, ce qui a pour conséquence que l'air circulant dans l'habitacle n'est pas efficacement traité, induisant de ce fait un risque sanitaire pour les utilisateurs du véhicule automobile.

Le but de l'invention est de remédier au moins partiellement à ces inconvénients.

D'autres exemples sont divulgués par les documents : JPS62105713, JP2011168150, EP3286025 (art. 54(3) CBE), US2016052363, JPS56135310, US2015360544, JPS63240422 et WO2015076872.

A cet effet, l'invention a pour objet un système de qualité d'air pour véhicule automobile, comprenant au moins un élément de purification d'un flux d'air à destination d'un habitacle du véhicule automobile, au moins un capteur de matière particulaire configuré pour mesurer une concentration de particules dans un flux d'air et un dispositif de contrôle de passage d'un flux d'air destiné à alimenter en air l'habitacle configuré pour être commandé par un résultat de la mesure du capteur de matière particulaire.

Ainsi, grâce à la présente invention, il est possible de contrôler en temps réel la qualité d'air vers l'habitacle, ce qui permet d'allonger la durée de vie d'un purificateur du système tout en réduisant les risques sanitaires pour les utilisateurs du véhicule automobile et en informant les utilisateurs d'un niveau de qualité d'air d'un flux d'air.

Selon l'invention, le système comprend un canal de circulation d'un flux d'air issu de l'extérieur du véhicule automobile, dit flux d'air extérieur, et un canal de circulation d'un flux d'air issu de l'habitacle du véhicule automobile, dit flux d'air intérieur, chacun desdits canaux étant muni d'un capteur de matière particulaire.

Selon l'invention, chacun des canaux de circulation du flux d'air extérieur et de circulation du flux d'air intérieur comprend un élément de purification d'air en aval du capteur de matière particulaire associé relativement respectivement au flux d'air extérieur et au flux d'air intérieur.

Selon une autre caractéristique de l'invention, le dispositif de contrôle de passage d'un flux d'air est un volet monté mobile entre une position de passage du flux d'air extérieur et une position de passage du flux d'air intérieur et disposé en aval des éléments de purification relativement au flux d'air extérieur et au flux d'air intérieur.

Selon une autre caractéristique de l'invention, le système comprend un ventilateur de mise en mouvement du flux d'air à destination d'un habitacle du véhicule automobile.

D'autres caractéristiques et avantages de l'invention apparaîtront à la lecture de la description qui va suivre. Celle-ci est purement illustrative et doit être lue en regard des dessins annexés sur lesquels :

- la figure 1 illustre un chronogramme d'un procédé de contrôle d'un système de qualité d'air;
- la figure 2 illustre une entrée d'air d'un dispositif de ventilation, chauffage et/ou climatisation pour la mise en œuvre du procédé de la figure 1 selon un premier mode de réalisation qui ne fait pas partie de l'invention ; et
- la figure 3 illustre une entrée d'air d'un dispositif de ventilation, chauffage et/ou climatisation pour la mise en œuvre du procédé de la figure 1 selon un mode de réalisation de l'invention.

Système de qualité d'air

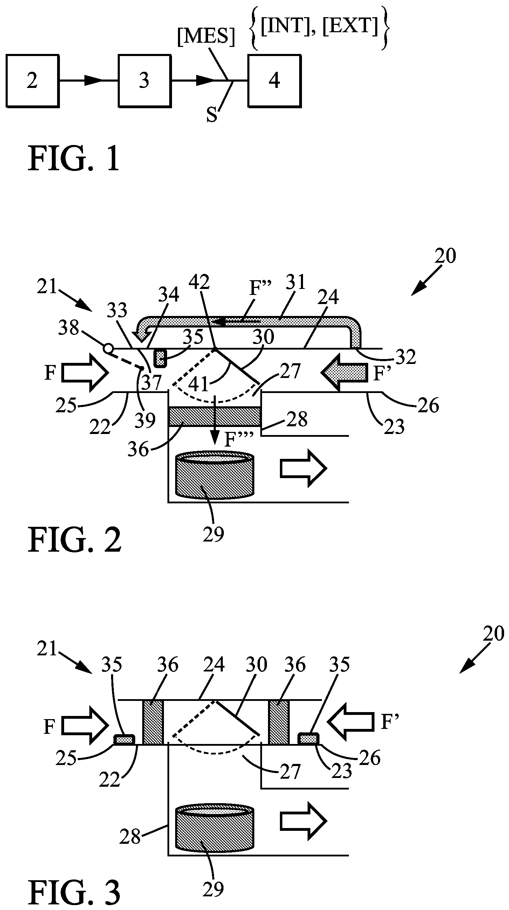

Un procédé de contrôle d'un système de qualité d'air pour véhicule automobile est référencé 1 dans la figure 1.

Le système de qualité d'air permet une dépollution de l'air destiné à alimenter l'habitacle du véhicule automobile.

Le système est soit intégré à un dispositif de chauffage, ventilation et/ou climatisation du véhicule automobile, soit un module spécialement dédié.

Le système comprend de préférence un purificateur d'air, tel qu'un filtre et/ou un ioniseur, permettant d'assainir un flux d'air qui le parcourt avant de pénétrer dans l'habitacle du véhicule.

Le système de qualité d'air comprend avantageusement un volet disposé en amont du purificateur d'air relativement au flux d'air.

Le volet est monté pivotant entre une position d'ouverture dans laquelle le volet laisse passer le flux d'air au travers du purificateur d'air et une position d'obturation dans laquelle le volet interdit au flux de traverser le purificateur d'air.

En complément ou en alternative, le système de qualité d'air comprend également un volet de commande de circulation d'un flux d'air issu de l'habitacle, autrement appelé air recyclé.

Le volet est pivotant entre une position d'ouverture dans laquelle le volet laisse passer le flux d'air recyclé à nouveau dans l'habitacle au travers du purificateur d'air et une position d'obturation dans laquelle le volet interdit au flux de pénétrer dans l'habitacle.

Le procédé de contrôle 1 permet le pivotement du volet du purificateur d'air et/ou du volet d'air recyclé.

Procédé de contrôle

Comme visible sur la figure 1, le procédé 1 comprend une étape 2 de mesure d'une concentration de particules dans au moins un flux d'air choisi parmi un flux d'air extérieur au véhicule automobile et un flux d'air intérieur.

La mesure de concentration de particules est effectuée par un capteur de matière particulaire.

Par matière particulaire, on entend un ensemble de particules de dimension suffisamment faible pour être transportées par l'air et être inhalées.

Les particules peuvent être solides, liquides, ou un mélange de solides et liquides.

Par exemple, un diamètre des particules est compris entre 0,01 $\mu$m et 10 $\mu$m.

Par exemple, la matière particulaire comprend un mélange de spores, de pollen, de fumée de cigarettes, de carbone ...

Le flux d'air intérieur correspond de préférence à un flux d'air circulant dans l'habitacle du véhicule automobile.

Le procédé 1 comprend également une étape de comparaison 3 de la valeur de concentration mesurée à une valeur seuil, notée S.

Le procédé 1 comprend également une étape 4 de déclenchement ou d'arrêt du système de qualité d'air selon un résultat de l'étape de comparaison.

Par déclenchement du système de qualité, on entend que le volet du purificateur d'air est en position d'ouverture et/ou que le volet d'air recyclé est en position d'ouverture.

Par arrêt du système de qualité, on entend que le volet du purificateur d'air est en position d'ouverture et/ou que le volet d'air recyclé est en position d'ouverture.

Avantageusement, le système de qualité d'air est déclenché si la valeur de concentration de particules mesurée, notée [MES] est supérieure à la valeur seuil S.

Avantageusement, le système de qualité d'air est arrêté si la valeur de la concentration de particules mesurée [MES] est inférieure à la valeur seuil S.

Avantageusement, la valeur seuil S correspond à une valeur de concentration maximale recommandée par une autorité nationale ou internationale, diminuée d'une valeur de concentration pré-déterminée, notée R.

La valeur de concentration pré-déterminée R est comprise entre 0 et 1, de préférence entre 0,75 et 1.

Avantageusement, la valeur seuil S est fonction d'une efficacité E d'un filtre du système de qualité d'air.

De manière connue, l'efficacité d'un filtre est calculée en % de poussière retenue (en nombre ou en masse) pour une granulométrie donnée.

De préférence, la valeur seuil S est donnée par la formule suivante :

$$ S = \frac{c_{max}\mathrm{RE}}{100 - E} $$

où $c_{max}$ est la valeur de concentration maximale recommandée par une autorité nationale ou internationale, R est la valeur de concentration pré-déterminée et E est l'efficacité du filtre.

Selon l'invention la concentration de particules est mesurée dans le flux d'air intérieur et dans ledit flux d'air extérieur.

Le résultat de la mesure dans le flux d'air intérieur est une valeur de concentration en particules dans le flux d'air intérieur, notée [INT].

Le résultat de la mesure dans le flux d'air extérieur est une valeur de concentration en particules dans le flux d'air extérieur, notée [EXT].

Dans ce cas, au cours de l'étape de comparaison 3, la valeur de concentration en particules dans le flux d'air intérieur [INT] est comparée à la valeur de concentration de particules dans le flux d'air extérieur [EXT], la valeur seuil S correspondant à la valeur de concentration de particules à l'extérieur du véhicule automobile [EXT].

De préférence, dans lequel l'étape de mesure de la concentration de particules a une durée comprise entre 1 secondes et 60 secondes.

Cette durée permet d'éviter une succession trop rapide d'ouvertures et fermetures du système de qualité d'air.

Avantageusement, le système de qualité d'air comprend également une étape 5 de maintien du système de qualité d'air en arrêt ou déclenché.

Cette étape 5 permet de prendre en compte d'autres critères tels qu'un taux d'humidité ou un niveau de dioxyde de carbone dans l'habitacle.

Le système de qualité d'air est soit une entrée d'un dispositif de ventilation, chauffage et/ou climatisation 21 d'un véhicule automobile, tel qu'illustré aux figures 2 et 3, soit un module dédié.

Premier mode de réalisation qui ne fait pas partie de l'invention

La figure 2 illustre un système de qualité d'air d'un dispositif de ventilation, chauffage et/ou climatisation 21 pour la mise en œuvre de l'étape de mesure 2.

Le système de qualité comprend une entrée d'air 20 du dispositif de ventilation, chauffage et/ou climatisation 21.

Comme visible sur la figure 2, l'entrée d'air comprend un conduit d'air extérieur 22 et un conduit d'air de recyclage 23.

Le conduit d'air extérieur 22 permet la circulation d'un flux d'air F provenant de l'extérieur du véhicule automobile.

Le conduit d'air intérieur 23 permet la circulation d'un flux d'air F' provenant de l'habitacle du véhicule automobile.

Sur la figure 2, les conduits d'air extérieur 22 et d'air de recyclage 23 sont formés d'un même canal 24, le flux d'air extérieur F pénétrant dans le canal 24 par une première extrémité 25 du canal 24, tandis que le flux d'air intérieur F' pénètre dans le canal 24 par une deuxième extrémité 26.

Les flux F et F' sont opposés l'un à l'autre.

Le canal 24 est percé d'un orifice 27 formant entrée d'un canal 28 d'alimentation en air d'un ventilateur 29 du dispositif 21.

Le canal 24 est muni d'un volet 30 pour distribuer le canal 28 en air extérieur et/ou en air intérieur, comme il va être détaillé.

Le volet 30 est par la suite appelé volet de distribution.

L'entrée d'air 20 comprend également un conduit 31 piqué sur les canaux d'air intérieur 23 et d'air extérieur 22.

Le conduit 31 est appelé conduit de dérivation.

Le canal de dérivation 31 permet qu'un flux d'air F" soit prélevé sur le canal d'air intérieur 23 et circule jusqu'au conduit d'air extérieur 22 entre une entrée 32 du conduit 31 piquée sur le conduit d'air intérieur 23 et une sortie 33 hors du conduit 31 piquée sur le conduit d'air extérieur 22.

L'entrée d'air 20 comprend également un volet 34 d'admission du flux d'air F" dans le canal d'air extérieur 22, comme il va être détaillé.

Le volet 34 est par la suite appelé volet de dérivation.

L'entrée d'air 20 comprend également un capteur de particules 35 disposé en aval du volet 34 relativement aux flux d'air F et F".

Le système de qualité d'air comprend un élément de purification 36.

Sur le mode de réalisation illustré, l'élément de purification 36 est un filtre.

Le filtre 36 est disposé dans le canal 28 en amont du ventilateur 29.

Le volet de dérivation 34 est monté mobile entre une position d'ouverture du conduit de dérivation 31 et une position de fermeture du conduit de dérivation 31.

Le volet de dérivation 34 comprend une paroi 37 pivotant autour d'un axe 38 entre la position d'ouverture et la position de fermeture.

Sur le mode de réalisation illustré à la figure 2, le volet 34 est un volet de type drapeau, l'une 39 des extrémités de la paroi 37 étant libre tandis qu'une extrémité opposée est fixe, solidaire de l'axe 38.

Dans la position d'ouverture, illustrée en pointillés sur la figure 2, la paroi 37 du volet 34 est disposée à distance de la sortie 33, ce qui permet au flux d'air intérieur F" de pénétrer dans le canal d'air extérieur 22.

Dans la position d'ouverture, la paroi 37 du volet 34 est disposée à l'intérieur du canal d'air extérieur 22.

Dans la position de fermeture, illustrée en trait plein sur la figure 2, la paroi 37 du volet 34 est disposée contre la sortie 33 du canal, ce qui empêche tout passage du flux d'air F" dans le canal d'air extérieur 22.

Le capteur de particules 35 est disposé relativement au volet de sorte qu'en position d'ouverture du conduit de dérivation 31, le capteur de particules reçoit le flux d'air F" exclusivement.

Pour ce faire, comme visible sur la figure 2, le capteur de particules est disposé contre une portion d'un parcours de l'extrémité libre 39 du volet 34 au cours de son mouvement de pivotement.

Ainsi, le pivotement du volet de dérivation assure que le flux d'air extérieur et le flux d'air intérieur traversent alternativement le capteur de particules.

Comme visible sur la figure 2, le volet de distribution 30 est monté mobile entre une position d'alimentation du canal 28 en air extérieur, dite position extérieure, et une position d'alimentation du canal 28 en air intérieur, dite position intérieure.

La position extérieure est illustrée en trait plein sur la figure 2, tandis que la position intérieure est illustrée en pointillés.

Le volet 30 comprend une paroi 41 pivotant autour d'un axe 42 entre la position d'alimentation en air extérieur et la position d'alimentation en air intérieur.

Dans la position extérieure, la paroi 41 du volet 30 obture le canal d'air intérieur 23.

Dans cette position, le flux d'air F'" circulant dans le canal 28 est issu du canal d'air extérieur.

De préférence, le volet 34 est en position de fermeture du conduit de dérivation 31.

Pour ce faire, le système de qualité d'air comprend avantageusement une unité de pilotage, non illustrée.

En position intérieure, le volet 30 obture le canal d'air extérieur 22.

Dans cette position, le flux d'air F'" circulant dans le canal 28 est issu du canal d'air intérieur.

Entre la position intérieure et la position extérieure, le volet 30 décrit une pluralité de positions intermédiaires dans lesquelles le canal 28 est alimenté en air extérieur et en air intérieur.

On note que le volet de distribution 30 forme un dispositif de contrôle du passage du flux d'air F'" destiné à alimenter en air l'habitacle.

Le volet 30 est configuré pour être commandé par un résultat de la mesure du capteur de matière particulaire, ce qui permet de diriger dans l'habitacle le flux d'air F issu de l'extérieur, le flux d'air F' issu de l'intérieur ou un mélange des deux.

Par exemple, en cas de pollution extérieure détectée par le résultat de la mesure du capteur 35, le volet 30 pivote en position intérieure.

Au contraire, en cas de pollution intérieure (fumée de cigarette...) ou en cas de pollution extérieure stable et supérieure aux limites requises, le volet 30 pivote en position extérieure.

## Mode de réalisation de l'invention

La figure 3 illustre un système de qualité d'air d'un dispositif de ventilation, chauffage et/ou climatisation 21 pour la mise en œuvre de l'étape de mesure 2 selon un autre mode de réalisation.

Les références numériques portant sur des éléments identiques à celles du premier mode de réalisation restent inchangées.

Le système de qualité comprend une entrée d'air 20 du dispositif de ventilation, chauffage et/ou climatisation 21.

Selon le mode de réalisation illustré à la figure 3, l'entrée d'air comprend un conduit d'air extérieur 22 et un conduit d'air de recyclage 23.

Le conduit d'air extérieur 22 permet la circulation d'un flux d'air F provenant de l'extérieur du véhicule automobile.

Le conduit d'air intérieur 23 permet la circulation d'un flux d'air F' provenant de l'habitacle du véhicule automobile.

Sur la figure 3, les conduits d'air extérieur 22 et d'air de recyclage 23 sont formés d'un même canal 24, le flux d'air extérieur F pénétrant dans le canal 24 par une première extrémité 25 du canal 24, tandis que le flux d'air intérieur F' pénètre dans le canal 24 par une deuxième extrémité 26.

Les flux F et F' sont opposés l'un à l'autre.

Chacun des canaux d'air intérieur 23 et d'air extérieur 22 est muni d'un capteur de particules 35.

Le canal 24 est percé d'un orifice 27 formant entrée d'un canal 28 d'alimentation en air d'un ventilateur 29 du dispositif 21.

Un filtre 36 est disposé dans chacun des canaux d'air extérieur et d'air intérieur, en amont de l'orifice d'entrée du canal 28 relativement respectivement au flux d'air F et F'.

On note qu'il peut avoir un seul filtre dans le canal 28.

Le canal 24 est muni d'un volet 30 pour distribuer le canal 28 en air extérieur et/ou en air intérieur.

Le volet de distribution 30 est monté mobile entre une position d'alimentation du canal 28 en air extérieur, dite position extérieure, et une position d'alimentation du canal 28 en air intérieur, dite position intérieure.

La position extérieure est illustrée en trait plein sur la figure 3, tandis que la position intérieure est illustrée en pointillés.

Le volet 30 comprend une paroi pivotant autour d'un axe entre la position d'alimentation en air extérieur et la position d'alimentation en air intérieur.

Dans la position extérieure, la paroi du volet obture le canal d'air intérieur 23.

Dans cette position, le flux d'air issu du canal d'air extérieur circule dans le canal 28.

De préférence, le volet est en position de fermeture du canal de dérivation.

En position intérieure, le volet obture le canal d'air extérieur 22.

Dans cette position, le flux d'air issu du canal d'air intérieur circule dans le canal 28.

Entre la position intérieure et la position extérieure, le volet décrit une pluralité de positions intermédiaires dans lesquelles le canal 28 est alimenté en air extérieur et en air intérieur.

Comme déjà indiqué en relation avec la figure 2, le volet de distribution 30 forme un dispositif de contrôle du passage du flux d'air F'" destiné à alimenter en air l'habitacle.

Le volet 30 est configuré pour être commandé par un résultat de la mesure du capteur de matière particulaire, ce qui permet de diriger dans l'habitacle le flux d'air F issu de l'extérieur, le flux d'air F' issu de l'intérieur ou un mélange des deux.

Par exemple, en cas de pollution extérieure détectée par le résultat de la mesure du capteur 35, le volet 30 pivote en position intérieure.

Au contraire, en cas de pollution intérieure (fumée de cigarette...), le volet 30 pivote en position extérieure.

## Avantages

Grâce au système de qualité d'air selon la présente invention, il est possible de commander quel flux d'air, intérieur et/ou extérieur, alimente l'habitacle, et quel flux d'air est filtré, ce qui permet d'allonger la durée de vie d'un purificateur du système tout en réduisant les risques sanitaires pour les utilisateurs du véhicule automobile.

Il est également possible d'informer les utilisateurs du véhicule automobile d'un niveau de qualité d'air extérieur et/ou intérieur.

## Revendications

1. Système de qualité d'air pour véhicule automobile, comprenant au moins un élément de purification (36) d'un flux d'air à destination d'un habitacle du véhicule automobile, au moins un capteur de matière particulaire (35) configuré pour mesurer une concentration de particules dans un flux d'air et un dispositif de contrôle (30) de passage d'un flux d'air destiné à alimenter en air l'habitacle configuré pour être commandé par un résultat de la mesure du capteur de matière particulaire,

   le système de qualité d'air comprenant un canal (22) de circulation d'un flux d'air issu de l'extérieur du véhicule automobile (F), dit flux d'air extérieur, et un canal (23) de circulation d'un flux d'air issu de l'habitacle du véhicule automobile (F'), dit flux d'air intérieur, chacun desdits canaux (22, 23) étant muni d'un capteur de matière particulaire (35), caractérisé en que,

chacun des canaux de circulation du flux d'air extérieur et de circulation du flux d'air intérieur (22, 23) comprend un élément de purification d'air (36) en aval du capteur de matière particulaire associé relativement respectivement au flux d'air extérieur (F) et au flux d'air intérieur (F').

**2.** Système de qualité d'air selon la revendication 1, dans lequel le dispositif de contrôle de passage d'un flux d'air est un volet (30) monté mobile entre une position de passage du flux d'air extérieur et une position de passage du flux d'air intérieur et disposé de préférence en aval des éléments de purification (36) relativement au flux d'air extérieur et au flux d'air intérieur.

**3.** Système de qualité d'air selon al revendication 1 ou 2, comprenant un ventilateur (29) de mise en mouvement du flux d'air à destination d'un habitacle du véhicule automobile.

**Patentansprüche**

**1.** Luftqualitätssystem für ein Kraftfahrzeug, umfassend zumindest ein Element zum Reinigen (36) eines Luftstroms in Richtung eines Innenraums des Kraftfahrzeugs, zumindest einen Partikelsensor (35), der konfiguriert ist, um eine Partikelkonzentration in einem Luftstrom zu messen, und eine Vorrichtung (30) zum Steuern des Durchgangs eines Luftstroms zur Luftversorgung des Innenraums, die konfiguriert ist, um durch ein Messergebnis des Partikelsensors gesteuert zu werden,

wobei das Luftqualitätssystem einen Kanal (22) zur Zirkulation eines von außerhalb des Kraftfahrzeugs stammenden Luftstroms (F), der als Außenluftstrom bezeichnet wird, und einen Kanal (23) zur Zirkulation eines aus dem Innenraum des Kraftfahrzeugs stammenden Luftstroms (F'), der als Innenluftstrom bezeichnet wird, umfasst, wobei jeder der Kanäle (22, 23) mit einem Partikelsensor (35) versehen ist, **dadurch gekennzeichnet, dass** jeder der Kanäle (22, 23) zur Zirkulation des Außenluftstroms bzw. zur Zirkulation des Innenluftstroms ein Luftreinigungselement (36) stromabwärts des zugehörigen Partikelsensors in Bezug auf den Außenluftstrom (F) bzw. den Innenluftstrom (F') umfasst.

**2.** Luftqualitätssystem nach Anspruch 1, wobei die Vorrichtung zum Steuern des Durchgangs eines Luftstroms eine Klappe (30) ist, die zwischen einer Außenluftstromdurchgangsposition und einer Innenluftstromdurchgangsposition beweglich montiert und vorzugsweise stromabwärts der Reinigungselemente (36) in Bezug auf den Außenluftstrom und den Innenluftstrom angeordnet ist.

**3.** Luftqualitätssystem nach Anspruch 1 oder 2, umfassend ein Gebläse (29) zum Bewegen des Luftstroms in Richtung eines Innenraums des Kraftfahrzeugs.

**Claims**

**1.** Air quality system for a motor vehicle, comprising at least one purifying element (36) for an air stream intended for an interior of the motor vehicle, at least one particulate sensor (35) configured to measure a concentration of particles in an air stream and a control device (30) for controlling the passage of an air stream intended to supply air to the interior configured to be controlled by a result of the measurement from the particulate sensor,

the air quality system comprising a channel (22) for circulating an air stream from the outside of the motor vehicle (F), called outside air stream, and a channel (23) for circulating an air stream from the interior of the motor vehicle (F'), called interior air stream, each of said channels (22, 23) being provided with a particulate sensor (35), **characterized in that** each of the channels for circulating the outside air stream and for circulating the interior air stream (22, 23) comprises an air purifying element (36) downstream of the associated particulate sensor relative, respectively, to the outside air stream (F) and to the interior air stream (F').

**2.** Air quality system according to Claim 1, wherein the control device for controlling the passage of an air stream is a flap (30) mounted to move between a position of passage of the outside air stream and a position of passage of the interior air stream and preferably disposed downstream of the purifying elements (36) relative to the outside air stream and to the interior air stream.

**3.** Air quality system according to Claim 1 or 2, comprising a fan (29) for moving the air stream intended for an interior of the motor vehicle.

[MES] {[INT], [EXT]}

[ 2 ] → [ 3 ] → S [ 4 ]

# FIG. 1

# FIG. 2

# FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP S62105713 B
- JP 2011168150 B
- EP 3286025 A
- US 2016052363 A

- JP S56135310 B
- US 2015360544 A
- JP S63240422 B
- WO 2015076872 A